# EUROPEAN PATENT APPLICATION

(11) **EP 0 553 933 A1**
(43) Date of publication of application: **04.08.1993**
(21) Application number: 93200235.5
(22) Date of filing: 29.01.1993
(51) Int. Cl.: B07C 5/02

(54) **An apparatus for individualizing products supplied in bulk, such as fruits**

(30) Priority: 30.01.1992 NL 9200167
(71) Applicant: AWETA B.V., NL-2631 HG Nootdorp (NL)
(72) Inventor: Tas, Adrianus Wilhelmus, NL-2631 HG Nootdorp (NL)
(74) Representative: Smulders, Theodorus A.H.J., Ir.

(57) **Abstract**

An apparatus for individualizing products supplied in bulk, such as fruits, comprises a substantially horizontal supply conveyor as well as a discharge conveyor which connects to the supply conveyor and is equipped with holders or rollers. Each holder or each receiving position between two successive rollers is capable of receiving at least one product. According to the invention, the supply conveyor (2) is a belt conveyor equipped with two belts (4, 5) arranged in V-shaped configuration relative to each other, and the speed ratio of the belt conveyor (2) and the discharge conveyor (3) is controllable depending on a product parameter of the products to be conveyed.

## Description

This invention relates to an apparatus for individualizing products supplied in bulk, such as fruits, comprising a substantially horizontal supply conveyor as well as a discharge conveyor which connects to the supply conveyor and is equipped with holders or rollers, each holder or each receiving position between two successive rollers being capable of receiving at least one product.

Such an apparatus is disclosed in EP-A-0.185.424. In this known apparatus, the supply conveyor is also a roller conveyor, in which a receiving position for at least one product is present between each pair of successive rollers. The supply conveyor runs in synchronization with the discharge conveyor so that a product is continually transferred at the point of transfer between the supply conveyor and the discharge conveyor. If at any receiving position of the supply conveyor no product is present, the corresponding receiving position of the discharge conveyor is not filled. If at any receiving position of the supply conveyor two smaller products are present, these two products are transferred to the discharge conveyor simultaneously.

The object of the present invention is to provide an apparatus of the above-described type, that is capable of individualizing the products to be supplied to the discharge conveyor, in such a manner that each holder or receiving position of the discharge conveyor is filled with a single product, while empty holders or positions, and double filling thereof, are avoided.

This object is achieved according to the present invention, by providing an apparatus in which the supply conveyor is a belt conveyor equipped with two belts arranged in V-shaped configuration relative to each other, and the speed ratio of the belt conveyor and the discharge conveyor is controllable depending on a product parameter of the products to be conveyed.

If the V-shaped belt conveyor is filled with one row of articles or products in mutual abutment and its speed is adapted to the speed of the discharge conveyor, one individualized article or product can be delivered to each position or holder of the discharge conveyor. If the average product diameter increases, the frequency of delivery of the belt conveyor decreases. As a result, some of the positions or holders of the discharge conveyor will remain empty. If the average product diameter decreases, the frequency of delivery will increase, giving rise to overfill of some positions on the discharge conveyor. The V-shaped belt conveyor and the control of the speed ratio of this conveyor and the discharge conveyor in dependency of a product parameter - in this case the product diameter - ensure individualized product supply at maximum capacity.

The control of this speed ratio can be effected by changing the speed of the V-shaped belt conveyor and/or that of the discharge conveyor.

Instead of the product diameter, the product weight can be chosen as a product parameter. The speed ratio control can be effected manually. It is also possible, however, to input the weight or diameter data per product to a computer controlling the apparatus, in which these data are processed so as to produce an average diameter value on the basis of which the speed of the V-shaped belt conveyor is controlled. A diameter value can also be measured by means of a camera, with the speed control of the conveyor being based on the average diameter of, for instance, 100 products.

Preferably, the belts of the V-shaped belt conveyor include an angle of between 90° and 150° and are capable of being driven at different speeds. As a result, the products received between the two belts rotate about their centrelines and thereby are more rapidly arranged in a single row behind each other. Preferably, the products are supplied to the V-shaped belt conveyor from a reservoir by means of a filling conveyor or elevator which may be arranged transversely to or in line with the belt conveyor and whose speed is controllable depending on the speed of the V-shaped belt conveyor.

One embodiment of the apparatus according to the present invention will now be described, by way of example only, with reference to the accompanying drawings, in which:

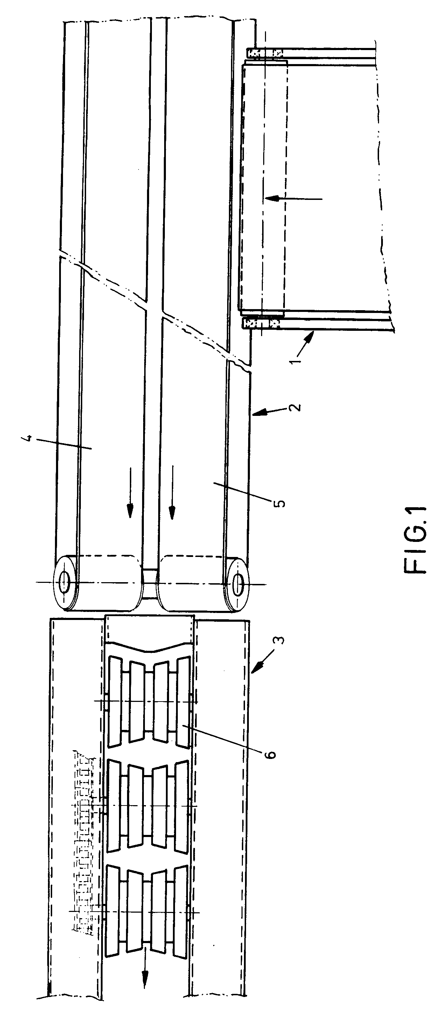

Fig. 1 is a top plan view of an apparatus for individualizing products supplied in bulk, such as fruits;

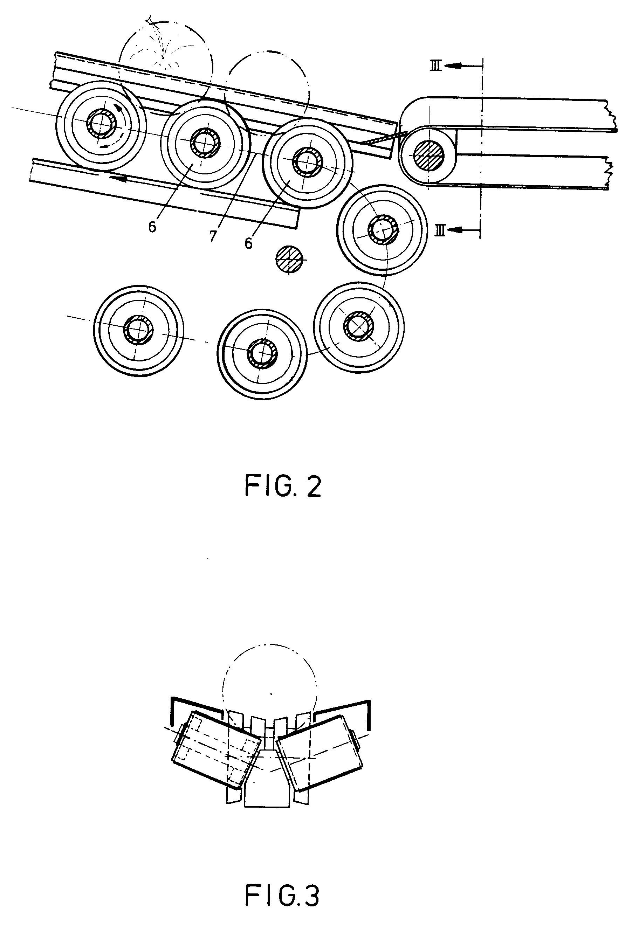

Fig. 2 is a section of the transfer portion of Fig. 1; and
Fig. 3 is a cross-section of the V-shaped belts used in the apparatus shown in Figs 1 and 2, taken on the line III-III of Fig. 2.

The apparatus essentially consists of three conveyors 1, 2, 3, connecting to each other. The filling conveyor 1 receives the products from a reservoir and feeds them in transverse direction to the supply conveyor 2. The supply conveyor 2 consists of two separate belts 4, 5, together including an angle of 90°-150°. The belts 3, 4 can be driven independently of each other by driving means (not shown) that are known per se. The V-shaped belt conveyor 2 transfers the products one by one to a discharge conveyor 3, made up of two parallel chains 7, between which hourglass-shaped rollers are arranged. Formed between each pair of successive rollers is a receiving position for one product. The discharge conveyor 3 preferably makes an angle of 5-15° with the horizontal.

In operation, the discharge conveyor 3 is driven at a speed adjusted to a processing apparatus, for instance a packing or sorting apparatus, disposed downstream of the discharge conveyor 3. The speed of the V-shaped conveyor 2 is controlled depending on the diameter or the weight of the product to be processed. The belts 4, 5 are driven at different speeds, so that the products form a single row of mutually abutting products. To achieve this, the speed of the filling conveyor is also controlled depending on the speed of the V-shaped belt conveyor 2.

## Claims

1. An apparatus for individualizing products supplied in bulk, such as fruits, comprising a substantially horizontal supply conveyor as well as a discharge conveyor which connects to said supply conveyor and is equipped with holders or rollers, each holder or each receiving position between two successive rollers being capable of receiving at least one product, characterized in that the supply conveyor (2) is a belt conveyor equipped with two belts (4, 5) arranged in V-shaped configuration relative to each other, and the speed ratio of the belt conveyor (2) and the discharge conveyor (3) is controllable depending on a product parameter of the products to be conveyed.

2. An apparatus according to claim 1, characterized in that the belts (3, 4) of the V-shaped belt conveyor (2) include an angle of between 90° and 150° and are capable of being driven at different speeds.

3. An apparatus according to claims 1-2, characterized in that a filling conveyor (1) or elevator is present, which is arranged transversely to or in line with the V-shaped belt conveyor (2) and whose speed is controllable depending on the speed of the V-shaped belt conveyor.

4. An apparatus according to claims 1-3, characterized in that the discharge conveyor (3) is a roller conveyor, which makes an angle of 5°-15° with the horizontal.
